Europäisches Patentamt

European Patent Office

Office européen des brevets

(11) Numéro de publication : **0 346 178 B1**

# (12) FASCICULE DE BREVET EUROPEEN

(45) Date de publication du fascicule du brevet :
**21.04.93 Bulletin 93/16**

(51) Int. Cl.$^5$ : **B62D 7/14**

(21) Numéro de dépôt : **89401440.6**

(22) Date de dépôt : **26.05.89**

(54) **Dispositif de direction sur les quatre roues d'un véhicule automobile.**

(30) Priorité : **07.06.88 FR 8807537**

(43) Date de publication de la demande :
**13.12.89 Bulletin 89/50**

(45) Mention de la délivrance du brevet :
**21.04.93 Bulletin 93/16**

(84) Etats contractants désignés :
**DE FR GB IT**

(56) Documents cités :
**EP-A- 0 198 450**
**FR-A- 2 559 117**
**FR-A- 2 579 551**
**FR-A- 2 608 545**
**US-A- 4 706 771**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Degonde, Michel Georges**
**41, Rue du Lieutenant Colonel de Montbrison**
**F-92500 Rueil Malmaison (FR)**

(74) Mandataire : **Fabien, Henri et al**
**PSA Peugeot Citroen Département OPS/BPI**
**18, rue des Fauvelles**
**F-92250 La Garenne Colombes (FR)**

## Description

L'invention concerne un dispositif de direction sur les quatre roues d'un véhicule automobile qui comporte, outre la commande habituelle de la direction des roues avant par le volant, des moyens induisant sur cet essieu et l'essieu arrière des corrections de braquage en fonction de paramètres représentatifs de l'état dynamique du véhicule et mesurés par des capteurs fournissant des signaux électriques correspondants, ces paramètres incluant la vitesse instantanée S' du véhicule, sa vitesse angulaire de lacet θ' et son accélération latérale R, et des moyens de calcul de deux signaux électriques de correction à partir de ces paramètres, qui sont respectivement appliqués à des moyens de correction de braquage de l'essieu avant et de l'essieu arrière.

On sait que des véhicules à quatre roues directrices avec correction de braquage sur l'essieu arrière peuvent présenter des qualités de manoeuvrabilité et d'insensibilité aux perturbations extérieures (vent latéral) remarquables.

Les dispositifs connus cherchent à faire évoluer le véhicule à angle d'attitude nul ou minimal, cet angle étant l'angle de la direction longitudinale du véhicule avec la vitesse de son centre de gravité.

En général, ces dispositifs ne réalisent la condition d'attitude nulle qu'en état stationnaire. Sur le dispositif décrit dans le brevet FR-A-2 608 545, on obtient au contraire une évolution du véhicule à attitude nulle, ou minimale, à tout instant quel que soit l'état stationnaire ou non.

Mais ces dispositifs conduisent à un sous-virage excessif croissant avec le niveau d'accélération latérale ce qui conduit à un dispositif de direction sur les quatre roues du type ci-dessus susceptible de braquer non seulement l'essieu arrière mais en plus de surbraquer l'essieu avant.

On peut dès lors se fixer un objectif plus général qui est de pouvoir conférer au véhicule des propriétés directionnelles données d'avance et indépendantes des propriétés de base du même véhicule à direction classique sur l'essieu avant.

Pour y parvenir, l'invention propose des moyens permettant de réaliser simultanément deux conditions:
- La première étant de maintenir à chaque instant, et non pas seulement en état stationnaire, l'angle d'attitude proche de zéro;
- La deuxième étant d'obtenir à toute vitesse instantanée S' du véhicule et à tout braquage δv du volant, une accélération latérale unique R, ne dépendant que de S' et de δv, donnée d'avance et également indépendante de l'état stationnaire ou non du véhicule à chaque instant.

On notera que la deuxième condition nécessite que la première soit vérifiée. En effet:
. lorsque l'angle d'attitude est presque nul, la mesure donnée par un accéléromètre monté transversalement au voisinage du centre de gravité du véhicule, coïncide avec l'accélération radiale instantanée, à une correction près dûe à l'angle de roulis;
. il faut en outre que l'accélération radiale présente un déphasage aussi faible que possible avec la commande de braquage des roues. Les simulations et l'expérimentation montrent que ce déphasage reste faible si l'angle d'attitude est presque nul.

D'autres caractéristiques et avantages de l'invention apparaîtront mieux dans la description détaillée qui suit et se réfère aux dessins annexés donnés uniquement à titre d'exemple, et dans lesquels:

La Figure 1 représente schématiquement un premier mode de réalisation d'un dispositif selon l'invention.

La Figure 2 montre un autre mode de réalisation.

La Figure 3 est un graphe montrant un exemple que l'on souhaite obtenir pour l'accélération radiale en fonction de l'angle de commande au volant.

La Figure 4 est un graphe d'un échelon de volant utilisé dans une simulation numérique dont les Figures 5 à 7 montrent les réponses d'un véhicule non équipé et du même véhicule équipé du dispositif.

La Figure 5 montre l'accélération radiale obtenue.

La Figure 6 montre la vitesse de lacet obtenue.

La Figure 7 montre l'angle d'attitude obtenu.

La Figure 8 montre les suppléments de braquage avant et arrière nécessaires à l'obtention du mouvement du véhicule équipé.

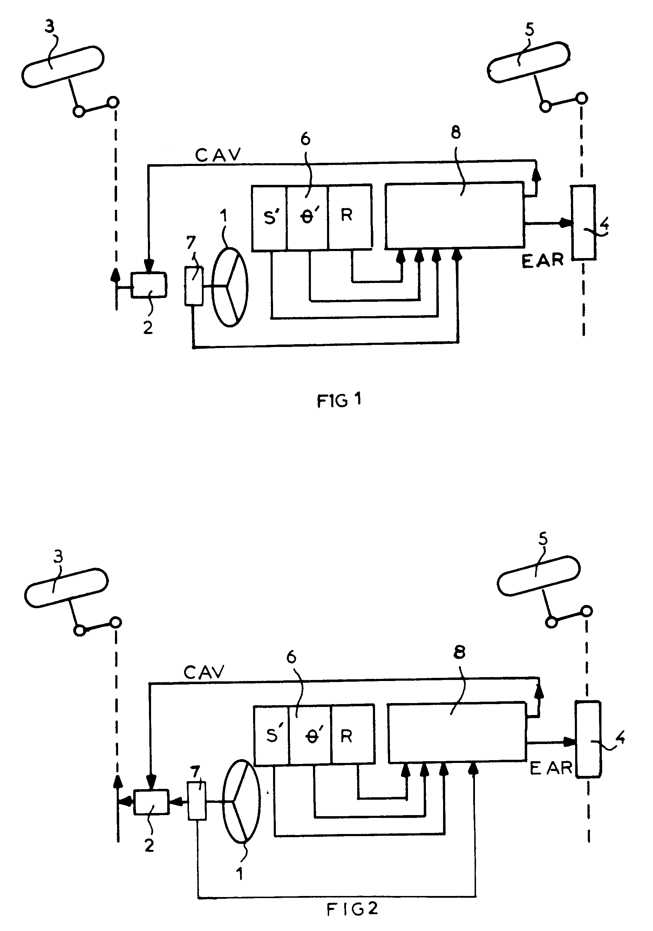

Le dispositif de la Figure 1 comporte un volant de direction 1 permettant au conducteur de diriger le véhicule, des moyens de commande 2 braquant les roues avant 3, des moyens 4 de commande de braquage des roues arrière (5), une unité de mesure 6 adaptée pour délivrer des signaux électriques, à savoir un signal représentatif de la vitesse instantanée S' du véhicule, un signal représentatif de la vitesse angulaire de lacet θ' mesurée par un gyromètre ou tout autre moyen équivalent et un signal représentant l'accélération transversale R du véhicule mesurée par un accéléromètre disposé au voisinage du centre de gravité, un capteur d'angle au volant 7 délivrant un signal électrique fonction de l'angle du volant 1, ainsi qu'une unité calcul 8 auquel sont appliqués les quatre signaux.

Les moyens de commande 2 peuvent comporter, par exemple, une vanne électro-hydraulique du type permettant d'obtenir à chaque instant que le braquage des roues avant 3 soit la somme, calculée par l'unité 8, de deux termes, le premier correspondant à l'angle de rotation δv du volant 1 et le deuxième correspondant à une correction.

L'unité de calcul 8 comporte une mémoire et un microprocesseur de calcul. La mémoire contient notamment une table ou plusieurs tables à deux entrées représentant les caractéristiques directionnelles souhaitées pour le véhicule. Elles expriment l'accélération radiale souhaitée R en fonction de l'angle de braquage au volant δv, chaque table correspondant à une vitesse du véhicule. Bien entendu, ces tables peuvent être remplacées par une formulation polynomiale, ou toute autre représentation mathématique.

Le microprocesseur procède aux calculs suivants à partir des mesures instantanées de S', θ', R et δv.

Il calcule l'accélération radiale souhaitée R(δv, S') en fonction du braquage δv mesuré au volant par le capteur 7 et pour la vitesse S' mesurée par l'unité 6. Il calcule alors la différence

$$EG = R(δv, S') - R$$

où R est l'accélération radiale mesurée.

Il calcule comme dans le brevet français FR-A-2 608 545 la quantité

$$EA = (R - θ'S')/S'$$

cette expression représentant avec une très bonne approximation la dérivée par rapport au temps de l'angle d'attitude du véhicule.

A partir des deux signaux d'erreur EG et EA, il calcule deux signaux de sortie EAV et EAR.

Ces derniers signaux sont les vitesses de correction de braquage respectivement des roues avant 3 et des roues arrière 5.

Les signaux EAV et EAR sont donnés par l'expression

$$\begin{vmatrix} EAV \\ EAR \end{vmatrix} = \begin{vmatrix} a & b \\ c & d \end{vmatrix} \times \begin{vmatrix} EG \\ EA \end{vmatrix}$$

où

$$\begin{vmatrix} a & b \\ c & d \end{vmatrix}$$

est la matrice de grains

Les valeurs des coefficients a, b, c et d sont déterminées de telle sorte que l'action de EAV et EAR sur les moyens de commande 2 et 4 fassent tendre les signaux d'erreur EG et EA vers O à tout instant.

Le signal EAR peut être appliqué directement aux moyens de braquage arrière 4 pour contrôler la vitesse de braquage, par exemple en règlant le débit d'un servo-moteur hydraulique en fonction de EAR.

Le signal EAV peut être utilisé selon deux modes distincts. Selon un premier mode, on calcule à chaque instant la dérivée :

$$\frac{dδv}{dt}$$

à partir des δv successifs et le signal de commande

$$CAV = \frac{1}{r} \frac{dδv}{dt} + EAV$$

où r est la démultiplication de la direction. Le signal CAV est appliqué aux moyens de braquage avant 2 et il représente la vitesse de braquage de l'essieu avant. Ce mode nécessite un asservissement de vitesse. Pour ce faire il suffit, par exemple, que l'électrovanne des moyens 2 soit du type délivrant un débit proportionnel au signal de commande CAV.

Selon le deuxième mode, on calcule l'intégrale de EAV par rapport au temps, puis le signal de commande:

$$CAV = \frac{1}{r} \, \delta v + \int_{o}^{t} EAV \, (t) \, dt$$

Le signal de commande est appliqué aux moyens de braquage avant 2 et il représente alors le braquage lui-même. Ce mode nécessite alors un asservissement de position, le moyen de braquage 2 étant un dispositif de direction asservi dans lequel le braquage est proportionnel à CAV.

La Figure 2 montre une variante de ce deuxième mode dans lequel le moyen de braquage avant ou sommateur 2 a une entrée directe du volant 1 ce qui évite le calcul par l'unité 8 de la somme des 2 termes de CAV.

Le moyen de commande 2 est un dispositif de braquage dit sommable c'est-à-dire qu'il permet d'obtenir à chaque instant que l'angle de braquage des roues avant 3 soit la somme de deux termes, le premier correspondant à l'angle de rotation $\delta v$ du volant 1 et le deuxième correspondant à un angle de correction calculé par l'unité 8. Le signal CAV alors égal à

$$\int_{o}^{t} EAV \, (t) \, dt$$

est une correction de surbraquage s'ajoutant au braquage du volant

$$\frac{1}{r} \delta v$$

On va maintenant décrire les effets d'un dispositif conforme à l'invention sur un exemple.

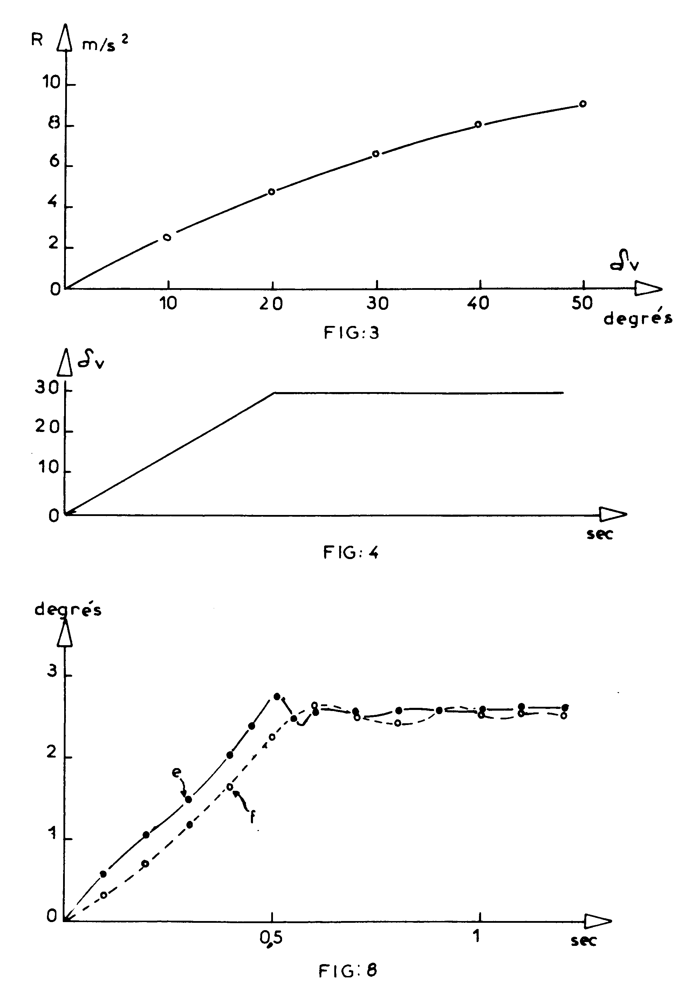

Le véhicule servant d'exemple présente à 125 Km/h, quand il n'est pas équipé, une caractéristique stationnaire de direction selon la Figure 3 (accélération radiale R fonction de l'angle au volant $\delta v$). On souhaite transformer ce véhicule, au moyen du dispositif conforme à l'invention en un véhicule qui présenterait cette caractéristique à toute vitesse (par exemple entre 60 et 160 Km/h et non plus seulement à 125 Km/h) et quel que soit l'état stationnaire ou non du véhicule à chaque instant.

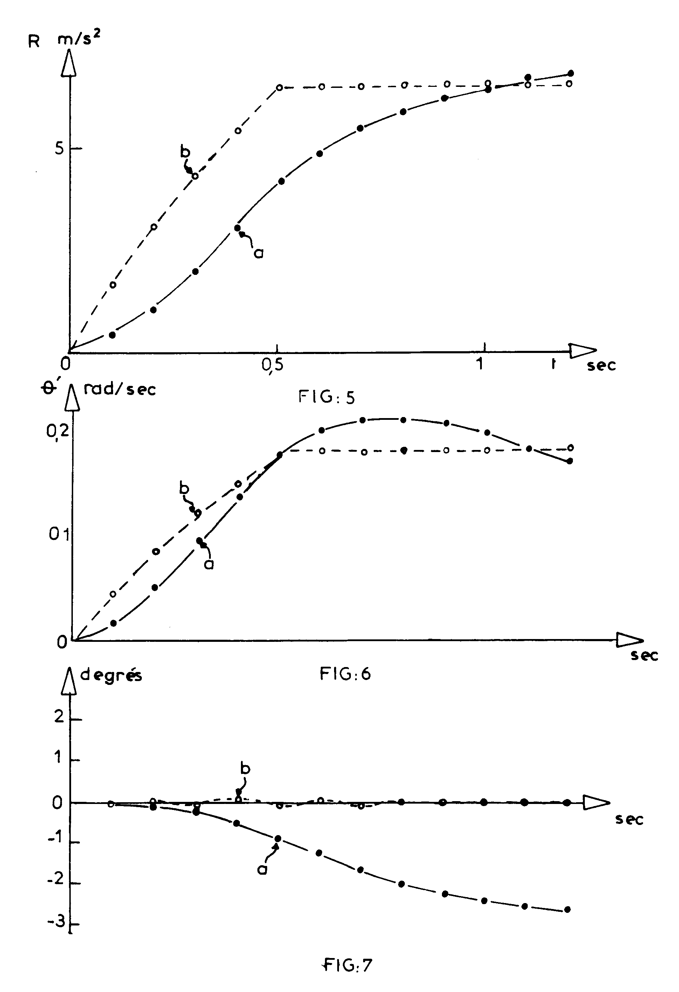

On a représenté Figure 4, un échelon de braquage volant en fonction du temps et aux Figures 5, 6 et 7 diverses réponses du véhicule à cet échelon:
- sur le véhicule non équipé : courbes (a)
- sur le véhicule transformé : courbes (b)

On constate Figures 5 et 6 que les réponses en accélération radiale et vitesse de lacet dans le cas (b) sont en quasi-simultitude avec l'échelon volant, sans déphasage appréciable.

Par contre dans le cas (a), la réponse à l'échelon est fortement déformée et le déphasage important de deux à trois dixièmes de seconde.

Il y a en outre des surtensions notables de la vitesse de lacet principalement, conformément au comportement bien connu de véhicules à direction habituelle sur l'essieu avant.

On peut constater que dans le cas du dispositif selon l'invention, l'accélération déterminée par le braquage volant pendant la phase transitoire est à chaque instant très voisine de l'accélération radiale stationnaire sous le même braquage volant. Leur différence est en valeur absolue inférieure à 0.1 m/s$^2$.

La Figure 7 montre l'évolution des angles d'attitude. Dans le cas (b) cet angle reste inférieur à 0,1°.

La Figure 8 montre l'angle de supplément de braquage avant (e) et l'angle de braquage arrière (f) nécessaires pour obtenir le mouvement observé.

## Revendications

1. Dispositif de direction sur les quatre roues (3,5) d'un véhicule automobile qui comporte, outre la commande habituelle de la direction des roues avant (3) par le volant (1), des moyens (2,4) induisant sur cet essieu et l'essieu arrière des corrections de braquage en fonction de paramètres représentatifs de l'état dynamique du véhicule et mesurés par des capteurs (7) fournissant des signaux électriques correspondants, ces paramètres incluant la vitesse instantanée S' du véhicule, sa vitesse angulaire de lacet $\theta'$ et son accélération latérale R, et des moyens de calcul (8) de deux signaux électriques de correction EAV et EAR à partir de ces paramètres, qui sont respectivement appliqués à des moyens (2,4) de correction de braquage de l'essieu avant et de l'essieu arrière, caractérisé en ce que les moyens de calcul (8) élaborent les signaux de correction EAV et EAR en boucle fermée, à partir des signaux d'erreur EG représentant la différence entre l'accélération radiale R souhaitée et l'accélération radiale mesurée et EA représentant l'angle d'attitude, de manière à réaliser simultanément les deux conditions suivantes:

- La première étant de maintenir à chaque instant, et non pas seulement en état stationnaire, l'angle d'attitude proche de zéro;
- La deuxième étant d'obtenir à toute vitesse instantanée S' du véhicule et à tout braquage $\delta v$ du volant, une accélération latérale unique R ne dépendant que de S'et de $\delta v$, donnée d'avance et également indépendante de l'état stationnaire ou non du véhicule à chaque instant.

**2.** Dispositif selon la revendication 1 caractérisé en ce que la réalisation de la première condition est évaluée par le signal d'erreur

$$EA = (R - \theta'S')/S'$$

**3.** Dispositif selon la revendication 1 caractérisé en ce que la réalisation de la deuxième condition est évaluée par le signal d'erreur

$$EG = R(\delta v, S') - R$$

**4.** dispositif selon l'ensemble des revendications 2 et 3 caractérisé en ce que les moyens (8) calculent les signaux EAV et EAR commandant respectivement les moyens de braquage avant (2) et arrière (4) suivant l'expression:

$$\begin{vmatrix} EAV \\ EAR \end{vmatrix} = \begin{vmatrix} a & b \\ c & d \end{vmatrix} \times \begin{vmatrix} EG \\ EA \end{vmatrix}$$

où

$$\begin{vmatrix} a & b \\ c & d \end{vmatrix}$$

est la matrice de gains

**5.** Dispositif selon la revendication 4 caractérisé en ce que l'on calcule à chaque instant la dérivée

$$\frac{d\delta v}{dt}$$

à partir des $\delta v$ successifs et le signal de commande

$$CAV = \frac{1}{r}\frac{d\delta v}{dt} + EAV$$

où r est la démultiplication de la direction, le signal CAV étant appliqué aux moyens de braquage avant (2), définissant la vitesse de braquage des roues (3).

**6.** Dispositif selon la revendication 4 caractérisé en ce que l'on calcule à chaque instant l'intégrale de EAV par rapport au temps, puis le signal de commande:

$$CAV = \frac{1}{r}\delta v + \int_{o}^{t} EAV(t)\,dt$$

le signal de commande appliqué aux moyens de braquage avant (2) représente alors le braquage lui-même.

**7.** Dispositif selon la revendication 4 caractérisé en ce que le moyen de braquage avant ou sommateur (2) a une entrée directe du volant (1), le signal CAV alors égal à

$$\int_{0}^{t} EAV(t)\,dt$$

étant une correction de surbraquage s'ajoutant au braquage du volant

$$\frac{1}{r}\delta v$$

## Patentansprüche

1. Lenkanordnung für vier Räder (3, 5) eines Kraftfahrzeuges, welche neben der gewöhnlichen Steuerung der Vorderräder (3) durch das Lenkrad (1) auf diese Achse und die Hinterachse einwirkende Mittel (2, 4) für das Nachführen beim Einschlagen in Abhängigkeit von für den Bewegungszustand des Fahrzeugs repräsentativen Parametern, die von Meßzellen (7) als elektrische Signale ausgegeben werden und die die augenblickliche Geschwindigkeit S' des Fahrzeugs, seine Winkelgeschwindigkeit der Drehung $\theta$' und seine Seitenbeschleunigung R einschließen, und Recheneinheiten (8) für die Berechnung der beiden elektrischen Korrektursignale EAV und EAR aus den Parametern, die jeweils an die Mittel (2, 4) für das Nachführen der Vorderachse und Hinterachse ausgegeben werden, umfaßt,
dadurch **gekennzeichnet,**
daß die Recheneinheiten (8) die Signale für das Nachführen EAV und EAR in einer geschlossenen Schleife aus den Fehlermeldungen EG der Abweichung der gewünschten radialen Beschleunigung R von der gemessenen radialen Beschleunigung und EA des Richtungswinkels berechnen, und zwar in der Art, daß gleichzeitig die beiden folgenden Bedingungen erfüllt sind:
   - erstens den Richtungswinkel zu jeder Zeit und nicht nur in stationärem Zustand ungefähr auf Null zu halten;
   - zweitens bei jeder beliebigen momentanen Geschwindigkeit S' des Fahrzeugs und bei jedem beliebigen Einschlag $\delta v$ des Lenkrades eine bestimmte seitliche Beschleunigung R zu gewährleisten, die nur von S' und $\delta v$ abhängt, wie sie im voraus und unabhängig davon vorgegeben wurde, ob das Fahrzeug im stationären Zustand ist oder nicht.

2. Anordnung nach Anspruch 1,
dadurch gekennzeichnet,
daß die Einhaltung der ersten Bedingung mit dem Signal für die Abweichung EA = (R-$\theta$'S')/S' überwacht wird.

3. Anordnung nach Anspruch 1,
dadurch gekennzeichnet,
daß die Einhaltung der zweiten Bedingung mit dem Signal für die Abweichung
$$EG = R(\delta v, S') - R$$
überwacht wird.

4. Anordnung nach den beiden Ansprüchen 2 und 3,
dadurch gekennzeichnet,
daß die Mittel (8) die Signale EAV und EAR für die jeweilige Steuerung der vorderen (2) und hinteren (4) Lenkeinrichtungen nach der Formel:

$$\begin{vmatrix} EAV \\ EAR \end{vmatrix} = \begin{vmatrix} a & b \\ c & d \end{vmatrix} \times \begin{vmatrix} EG \\ EA \end{vmatrix}$$

wobei

$$\begin{vmatrix} a & b \\ c & d \end{vmatrix}$$

die Abbildungsmatrix ist, berechnen.

5. Anordnung nach Anspruch 4,
dadurch gekennzeichnet,
daß zu jeder Zeit die Ableitung

$$\frac{d\delta v}{dt}$$

ausgehend von den aufeinanderfolgenden Intervallen $\delta v$ und der Steuerbefehl

$$CAV = \frac{1}{r}\frac{d\delta v}{dt} + EAV$$

berechnet wird, wobei r die Übersetzung der Lenkung ist und das Signal CAV an die vordere Steuerung (2) ausgegeben wird, was die Einschlaggeschwindigkeit der Räder (3) bestimmt.

6. Anordnung nach Anspruch 4,
dadurch gekennzeichnet,
daß man zu jedem Zeitpunkt das Integral von EAV über die Zeit bestimmt, aus welchem sich der Steuerbefehl ergibt:

$$CAV = \frac{1}{r}\ \delta v\ +\ \int_{o}^{t} EAV\ (t)\ dt$$

wobei der Befehl an die vordere Steuerung (2) ausgegeben wird und somit die eigentliche Steuerung darstellt.

7. Anordnung nach Anspruch 4,
dadurch gekennzeichnet,
daß die vordere Steuerung oder der Summierer (2) einen direkten Eingang vom Steuerrad (1) hat, das Signal CAV also gleich

$$\int_{o}^{t} EAV\ (t)\ dt$$

ist und zusätzlich zum Einschlagen des Lenkrades

$$\frac{1}{r}\ \delta v$$

eine Korrektursteuerung darstellt.

## Claims

1. A steering device for the four wheels (3, 5) of a motor vehicle which, in addition to the normal control for steering of the front wheels (3) by the steering wheel (1), comprises means (2, 4) inducing, on this axle and the rear axle, corrections of turning as a function of parameters representing the dynamic state of the vehicle and measured by sensors (7) supplying corresponding electrical signals, these parameters including the momentary speed S' of the vehicle, its angular rate of yaw $\theta$' and its lateral acceleration R, and means (8) for calculating two electrical correction signals EAV and EAR on the basis of these parameters, which are respectively applied to means (2, 4) for correcting the turning of the front axle and the rear axle, characterised in that the calculation means (8) prepare the correction signals EAV and EAR in a closed loop, on the basis of error signals EG representing the difference between the desired radial acceleration R and the measured radial acceleration and EA representing the angle of attitude, so as to achieve simultaneously the following two conditions:

- the first being at any time, and not only in the stationary state, to keep the angle of attitude close to zero;
- the second being to obtain for any momentary speed S' of the vehicle and for any turning δv of the steering wheel, a single lateral acceleration R depending only on S' and on δv, given in advance and also independent of whether or not the vehicle is stationary at any time.

2. A device according to Claim 1, characterised in that achievement of the first condition is assessed by the error signal

$$EA = (R - \Theta'S')/S'$$

3. A device according to Claim 1, characterised in that achievement of the second condition is assessed by the error signal

$$EG = R(\delta v, S') - R$$

4. A device according to all of Claims 2 and 3, characterised in that the means (8) calculate the signals EAV and EAR respectively controlling the front (2) and rear (4) turning means in accordance with the expression:

$$\begin{vmatrix} EAV \\ EAR \end{vmatrix} = \begin{vmatrix} a & b \\ c & d \end{vmatrix} \times \begin{vmatrix} EG \\ EA \end{vmatrix}$$

where

$$\begin{vmatrix} a & b \\ c & d \end{vmatrix}$$

is the matrix of gains

5. A device according to Claim 4, characterised in that a calculation is made at any time of the derivative

$$\frac{d\delta v}{dt}$$

using successive values for δv and the control signal

$$CAV = \frac{1}{r}\frac{d\delta v}{dt} + EAV$$

where r is the demultiplication of steering, the signal CAV being applied to the front turning means (2), defining the turning speed of the wheels (3).

6. A device according to Claim 4, characterised in that a calculation is made at any time of the integral of EAV relative to time, then the control signal:

$$CAV = \frac{1}{r} d\delta v + \int_{o}^{t} EAV(t)\, dt$$

the control signal applied to the front turning means (2) then represents the turning itself.

7. A device according to Claim 4, characterised in that the front turning means or adder (2) has a direct input from the steering wheel (1), the CAV signal then equal to

$$\int_{o}^{t} EAV\ (t)\ dt$$

being a correction for over-turning which is added to the turning of the steering wheel

$$\frac{1}{r}\delta v$$

FIG 1

FIG 2

FIG:3

FIG:4

FIG:8

R m/s²

b

a

5

0                    0,5              1        t    sec

FIG: 5

θ' rad/sec

0,2

b

a

0,1

0                                                   sec

FIG: 6

degrés

2

1

b

0                                                   sec

a

-1

-2

-3

FIG: 7